# EUROPEAN PATENT SPECIFICATION

(11) **EP 0 415 393 B1**
(45) Date of publication and mention of the grant of the patent: **10.12.1997**
(21) Application number: 90116583.7
(22) Date of filing: 29.08.1990
(51) Int. Cl.: G01N 27/38

(54) **Method and apparatus for reviving an electrode of a biosensor**
Methode und Vorrichtung zur Reaktivierung einer Elektrode bei einem Biosensor
Méthode et appareil pour réactiver une électrode dans un biocapteur

(30) Priority: 30.08.1989 JP 223613/89
(43) Date of publication of application: 06.03.1991
(73) Proprietor: DAIKIN INDUSTRIES, LTD., Kita-ku, Osaka 530 (JP)
(72) Inventor: Inamoto, Tomoyuki, Kusatsu-shi, Shiga 525 (JP)
(74) Representative: Prüfer, Lutz H., Dipl.-Phys.

(56) References cited:
- EP-A- 0 103 109
- GB-A- 2 019 580
- GB-A- 2 201 248
- PATENT ABSTRACTS OF JAPAN vol. 9, no. 329 (P-416)(2052) 24 December 1985, & JP-A- 60 155959 (MATSUSHITA DENKO K.K.) 16 August 1985,

## Description

The present invention relates to methods and apparatus for reviving an electrode of a biosensor,

It is known that a physiologically active substance is capable of selectively detecting a very complicated organic compound, protein or the like with high sensitivity. With attention directed to this characteristic, research has been made in various biosensors.

A typical biosensor having an electrode unit and a physiologically active substance fixed thereon is proposed. The biosensor is used for detecting the existance of an object substance, the relative or active quantity of the object substance and the like based on an electrical signal output from the electrode unit corresponding to the biological reaction of the object substance, under the condition that a predetermined forward bias is applied to the electrode unit. For example, the electrode unit has a working electrode made of platinum and a counter electrode made of silver. An enzyme-immobilized membrane is fixed onto the electrode unit. When the object substance is to be measured, hydrogen peroxide is generated through an enzyme reaction of the object substance. Then the generated hydrogen peroxide reaches the surface of the electrode unit through a hydrogen peroxide penetration membrane. The electrode unit outputs an electrical signal corresponding to the quantity of hydrogen peroxide that reaches it. The existance of the object substance, the relative or active quantity of the object substance and the like are detected based on the electrical signal. Concretely, the working electrode has a forward bias of 0.6 volts applied with respect to the counter electrode.

In the biosensor described above, an interfering layer such as an oxidized layer and the like which interferes with electrical signals is generated on the working electrode, and the activity of the working electrode is lowered as the object substance measuring operation is continued with the forward bias being applied to the electrode unit. It is proposed that a reverse bias is accordingly applied to the electrode unit (the working electrode has a reverse bias of about-0.6 volts applied with respect to the counter electrode, corresponding to the concrete example) after one or more measuring is performed, within the time period in which the measurement is not performed, so as to remove the interfering layer. Then the activity of the working electrode is revived. The level of the output signal from the electrode unit is raised to the original level. ( Refer to Japanese Patent Laid Open Sho 60-155959 ).

Lowered measuring sensitivity is recovered by applying the predetermined reverse bias voltage to the electrode unit within the time period in which the measurement is not performed, as is described above, then measuring with high sensitivity can be performed again.

In the reviving apparatus described above, a constant-voltage for reviving ( reverse bias ) is applied between the working electrode and the counter electrode. The oxydized layer on the working electrode is reduced, hydrogen, hydrogen ions and the like are accordingly generated. When a constant-voltage for measurement ( forward bias ) is applied between the working electrode and the counter electrode, a diffusion current flows depending upon the generated hydrogen, hydrogen ions and the like.

As a result, the electrical signal provided for measuring is affected by lowering, by the diffusion current, so as to remarkably lower measuring accuracy just after the constant-voltage for measurement is applied between the working electrode and the counter electrode. When the measurement is performed after the diffusion current is sufficiently lowered, sufficient measuring accuracy is obtained, but a remarkably long waiting time period ( for example, 1-2 minutes ) is needed.

The same disadvantages as above arises for a biosensor having a reference electrode in addition to the working electrode and the counter electrode.

From the GB-A-2 201 248 a method and an apparatus for reviving an electrode unit of a bias sensor according to the preamble of claim 1 and according to the preamble of claim 6 are known. According to the known method and apparatus a physiologically active substance is placed on the working electrode. Thereafter the bias between the two electrodes is set to zero volts. Following a bias is applied being higher than the measuring bias. Thereafter the measuring bias is applied to the two electrodes.

From the EP-A-0 103 109 a method is known for determining the concentration of a substance being applied to a measuring electrode. Firstly a forward bias higher than the measuring bias is applied. Secondly a bias is applied being lower than the measuring bias, but having the same polarity. Thirdly, the measuring bias is applied.

From the JP 60-155 959 A a method for reviving an electrode unit of a biosensor which includes a working electrode is known, in which by applying an opposite potential to an electrode, a matter eventually adsorbed on the electrode is removed.

It is an object of the present invention to shorten the time period between performing a reviving operation for an electrode unit to when it is possible to start a measuring operation for an object substance and to significantly improve the lifetime of the biosensor.

This object is solved by a method with the features of claim 1 and by an apparatus with the features of claim 5.

Firstly the method applies a predetermined reverse bias to a working electrode for a predetermined time period, then, applies forward bias higher than a forward measurement bias to the working electrode for a predetermined time period, then, applies the forward measurement bias to the working electrode.

In this reviving method, an interfering layer on the working electrode which interferes with the turning on of electricity is reduced and the activity of the working electrode is revived by applying the reverse bias to the working electrode. Substances generated through reduction of the interfering layer are moved to one of the electrodes at high speed by applying the forward bias higher than the forward measurement bias to the working electrode. The substances are rapidly consumed, accordingly, when the forward bias is applied to the working electrode. As a result, a time period between performing a reviving operation for an electrode unit to when it is possible to start a measuring operation for an object substance with a predetermined accuracy maintained, is remarkably shortened.

The time period for applying the higher bias to the working electrode may be nearly equal to the time period for applying the reverse bias to the working electrode.

The predetermined reverse bias is a reverse bias which is gradually increased until its absolute value reaches a predetermined value. Damage of a membrane fixed on the surface of the electrode unit, effected by current is remarkably reduced.

It is preferred that the higher forward bias is a forward bias which also is gradually increased until its absolute value reaches a higher predetermined value than the forward bias for measuring. Damage of the membrane fixed on the surface of the electrode unit, effected by current is remarkably reduced.

In the reviving apparatus, the condition of applying voltage for reviving to the working electrode by the reviving voltage applying means and the condition of applying the higher voltage to the working electrode by the higher voltage applying means are selected in this order by the selection means, before an actual measuring operation is started. First, the interfering layer on the surface of the working electrode is removed. After the interfering layer has been removed, substances generated through removal of the interfering layer are moved to one of the electrodes at high speed by applying the higher forward bias to the working electrode. The substances are rapidly consumed when the forward bias is applied to the working electrode. As a result, after a short time period from when a reviving operation for an electrode unit has passed, a measuring operation for an object substance can be started with a predetermined accuracy maintained.

The reviving apparatus further comprises a first time constant means for applying a predetermined time constant to the reviving voltage. Damage of a membrane fixed on a surface of an electrode unit, effected by current is remarkably reduced.

It is preferred that the reviving apparatus further comprises a second time constant means for applying a predetermined time constant to the higher voltage. Damage of a membrane fixed on a surface of an electrode unit, effected by current is remarkably reduced.

More specifically, the interfering layer can easily be removed by a reduction operation because the reviving operation is an operation to remove the interfering layer formed on the working electrode, and the interfering layer is generated by oxidization. When the interfering layer is removed, hydrogen, hydrogen ions and the like are inevitably generated through removal of the interfering layer. The generated substances diffuse when the voltage for measuring is applied to the working electrode. As a result, concentration measuring of an object substance with high accuracy is performed only after the diffusion current is sufficiently lowered. Concretely, when the forward measurement bias is determined to be 0.75 volts and the reverse bias for reviving is determined to be -1 volt, the diffusion current is sufficiently lowered only after 1-2 minutes after removal of the interfering layer. The disadvantage of having to wait a long time period until actual measuring can be started, arises.

On the contrary, in the present invention, substances generated through removal of the interfering layer are moved to one of the electrodes at high speed because the higher voltage is applied to the working electrode before the measurement voltage is applied to the working electrode. The substances are sufficiently close to one of the electrodes, accordingly, when the measurement voltage is applied to the working electrode, thereby the substances are rapidly consumed when the measurement voltage is applied to the working electrode. As a result, a time period between removal of the interfering layer to when it is possible to start the concentration measuring of an object substance with high accuracy is remarkably shortened.

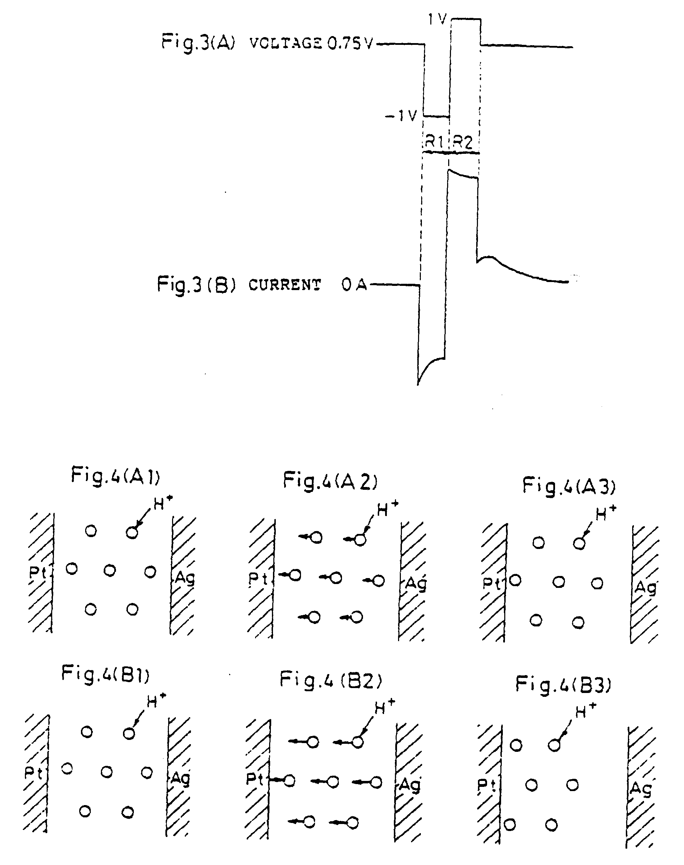

Figures 4 are diagrams useful in understanding the operation described above. Figs. 4(A1) to fig. 4(A3) correspond to a conventional case, while figs. 4(B1) to fig. 4(B3) correspond to this present invention.

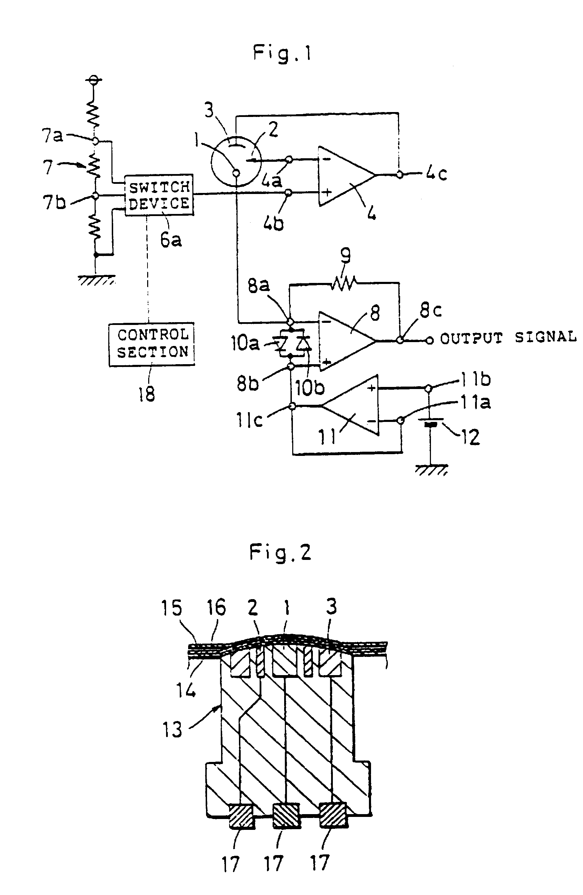

As is illustrated in figs 4(A1) and 4(B1), the same quantity of generated substances exist between the working electrode and the reference electrode when the interfering layer is removed. Then, in the conventional case, only a fairly small moving force toward the working electrode acts on the generated substances as is illustrated in fig. 4(A2), thereby the time period for consuming a predetermined quantity of the generated substances is lengthened. That is, the generated substances are not so close to the working electrode as is illustrated in fig. 4(A3) after a predetermined time period has passed, thereby a long time period is needed for most of the generated substances to reach the working electrode and be consumed. On the contrary, in this present invention, a fairly large moving force toward the working electrode acts on the generated substances as is illustrated in fig. 4(B2), thereby the generated substances are fairly close to the working electrode when a time period equal to the above described time period has passed, as is illustrated in fig. 4(B3). Thereafter, the same moving force as in the conventional case acts on the generated substances. A time period for consuming a predetermined quantity of the generated substances is reduced because the generated substances are already close to the working electrode. As a result, the time period between removal of the interfering layer to when it is possible to start actual measuring is remarkably shortened. A biosensor having three electrodes is illustrated in fig. 2. A biosensor having two electrodes, excluding the reference electrode, is similar to the biosensor having threeelectrodes.

These and other objectives, features and advantages of the present invention will be more readily understood upon consideration of the present invention, taken in conjunction with the accompanying drawings.
Figure 1 is an electronic circuit diagram of an electrode reviving apparatus in accordance with a first example useful for understanding the present invention;
Figure 2 is a vertical sectional view of the center portion of an electrode unit;
Figures 3(A) and 3(B) are diagrams showing variations of bias voltage and current when the electrode unit is revived;
Figures 4(A1), 4(A2), 4(A3), 4(B1), 4(B2), and 4(B3) are diagrams showing movement of substances generated through reviving of the electrode unit;
Figure 5 is an electronic circuit diagram of an electrode reviving apparatus in accordance with a second example useful for understanding the present invention;
Figure 6 is an electronic circuit diagram of an electrode reviving apparatus in accordance with a first embodiment of the present invention;
Figures 7(A) and 7(B) are diagrams showing variations of bias voltage and current when the electrode unit is revived;
Figure 8 is an electronic circuit diagram of an electrode reviving apparatus in accordance with a second embodiment of the present invention.

Fig. 1 is an electronic circuit diagram of an electrode reviving apparatus in accordance with a first example useful for understanding the present invention.

The apparatus revives an electrode unit having three electrodes, such as a working electrode 1 made of platinum, a reference electrode 2 and a counter electrode 3, both made of silver.

The reference electrode 2 and the counter electrode 3 are connected to an inverting input terminal 4a and an output terminal 4c of an operational amplifier 4, respectively. A non-inverting input terminal 4b of the operational amplifier 4 is selectively connected to a high voltage tap 7a, a low voltage tap 7b or ground of a voltage divider 7 having resistances by means of a switch device 6a. An inverting input terminal 8a of a current/voltage converting operational amplifier 8 for providing measurement signal is connected to the working electrode 1. A current/voltage converting resistance 9 is connected between an output terminal 8c and the inverting input terminal 8a of the current/voltage converting operational amplifier 8. Diodes 10a and 10b are connected in parallel and in reverse polarity with respect to one another between the inverting input terminal 8a and a non-inverting input terminal 8b of the current/voltage converting operational amplifier 8. A DC power source 12 for measuring is connected to a non-inverting input terminal 11b of a buffer amplifier 11. An output terminal 11c of the buffer amplifier 11 is connected directly to an inverting input terminal 11a of the buffer amplifier 11. The output terminal 11c of the buffer amplifier 11 is connected to the non-inverting input terminal 8b of the current/voltage converting operational amplifier 8. The DC power source 12 is used for applying a forward bias of 0.75 volts to the working electrode 1. The high voltage tap 7a and the low voltage tap 7b are used for applying biases of -1 volt and 1 volt repectively, to the working electrode 1. A control section 18, provided as a selection means, is used to control the operation of the switch device 6a.

Fig. 2 is a vertical sectional view of the center portion of an electrode unit to which the reviving apparatus is applied.

The working electrode 1 is provided at a predetermined position in an electrode unit body 13. The ring shaped reference electrode 2 and the ring shaped counter electrode 3, both electrodes 2 and 3 surrounding the periphery of the working electrode 1, are provided in the electrode unit body 13 in this order. The electrode unit body 13 has a convex surface on the side on which the working electrode 1, the reference electrode 2 and the counter electrode 3 are provided. A hydrogen peroxide selective penetration membrane 14, a glucose oxidaze immobilized membrane (hereinafter referred to as GOD immobilized membrane) 15 and a diffusion-limiting membrane 16 made of polyvinyl acetate and the like are provided in this order to fit the convex surface of the electrode unity body 13. Terminals 17 for supplying output signals are provided in the electrode unit body 13. The terminals 17 are connected to the working electrode 1, the reference electrode 2 and the counter electrode 3, respectively.

The operation of the sensor for measuring glucose concentrations having the arrangement described above is as follows.

When measuring of glucose concentrations is carried out, the non-inverting input terminal 4b of the operational amplifier 4 is connected to the high voltage tap 7a of the voltage divider 7 by operating the switch device 6a. Then, a constant voltage for reviving (for example the constant voltage of -1 volt) is applied between the working electrode 1 and the reference electrode 2 (Refer to a region R1 in figs. 3(A) and 31B)).

In this condition, current flows to reduce interfering substances which are formed on a surface of the working electrode 1. The interfering substances are completely removed and activity of the working electrode 1 is revived by continuing to apply the constant voltage for reviving between the electrodes 1 and 2 for a fairly short time period (for example a time period of about 4 seconds). When the interfering substances are completely removed, hydrogen, hydrogen ions and the like are disposed between the working electrode 1 and the reference electrode 2.

Thereafter, the non-inverting input terminal 4b of the operational amplifier 4 is connected to the low voltage tap 7b of the voltage divider 7 by operating the switch device 6a. Then, a higher voltage (for example the higher voltage of 1 volt) higher than a measurement voltage is applied between the working electrode 1 and the reference electrode 2 ( Refer to a region R2 in figs. 3(A) and 3(B)).

In this condition, a large moving force acts on the floating hydrogen, hydrogen ions and the like to move them toward the working electrode 1. Most hydrogen, hydrogen ions and the like are moved close to the working electrode 1 by applying a high voltage between the working electrode 1 and the reference electrode 2 for a fairly short time period (for example, a time period of about 5 seconds).

Thereafter, the non-inverting input terminal 4b of the operational amplifier 4 is connected to ground of the voltage divider 7 by operating the switch device 6a. Then, a predetermined voltage (for example a voltage of 0.75 volts) is applied as a forward bias to the working electrode 1 on the basis of the reference electrode 2. The hydrogen, hydrogen ions and the like are consumed within a short time period, then glucose concentrations may be measured. The time period between removal of interfering substances to when measuring is permitted 1-2 minutes in conventional reviving apparatus, while the time period is reduced to about 30-45 seconds in this example.

After reviving is finished, a signal corresponding to the concentration of glucose is output as follows by dropping an object solution onto the electrode unit.

The dropped object solution is guided to the GOD immobilized membrane 15 with limited penetration by the glucose to some degree, by the diffusion-limiting membrane 16. Then, the following reaction takes place: 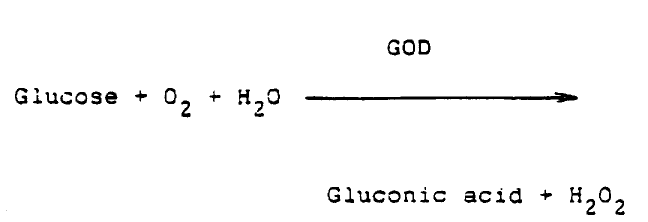 Hydrogen peroxide, the quantity of which corresponds to concentration of existing glucose, is accordingly generated. The generated hydrogen peroxide is guided to the surface of the working electrode 1 which is revived to have sufficient activity, through the hydrogen peroxide selective penetration membrane 14. The forward bias is kept applied to the working electrode 1. An oxydation reaction is carried out on the surface of the working electrode 1 and current corresponding to the amount of hydrogen peroxide flows in through the working electrode 1. The current is applied to the inverting input terminal 8a of the current/voltage converting operational amplifier 8, then a voltage signal is output from the output terminal 8c of the current/voltage converting operational amplifier 8. The voltage signal is generated by adding an offset voltage caused by the forward bias and a voltage signal being proportional to the current.

Thereafter, only the voltage signal proportional to the current is extracted, then the extracted voltage signal is differentiated to obtain a first-order differential value, then a peak value of the first-order differential value is detected. Finally, a glucose concentration detection signal with high accuracy is obtained by performing the necessary operations.

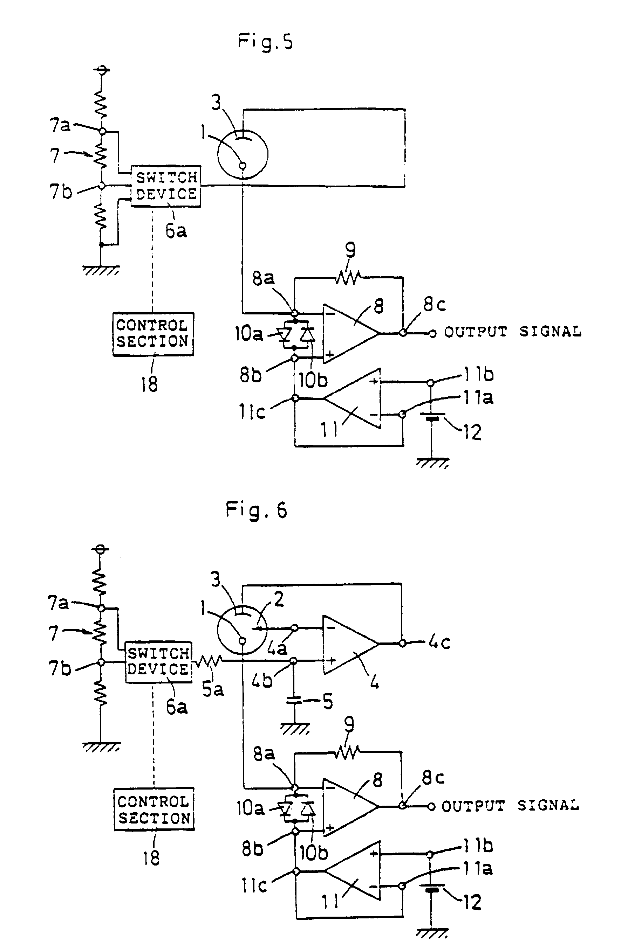

Fig. 5 is an electronic circuit diagram of an electrode reviving apparatus in accordance with a second example useful for understanding the present invention.

Different points from the first example are as follows,
(1) an electrode unit having two electrodes, one is the working electrode 1 made of platinum while another, the counter electrode 3 made of silver, is used for being revived, and
(2) the counter electrode 3 is directly connected to the switch device 6a by omitting the operational amplifier 4.

In this example, reviving for an electrode unit having two electrodes can be performed. Also, the time period between removal of an interfering substances to when it is possible to start actual measuring can be shortened.

Fig. 6 is an electronic circuit diagram of an electrode reviving apparatus in accordance with a first embodiment of the present invention.

Different points from the first example are as follows,
(1) the non-inverting input terminal 4b of the operational amplifier 4 is connected to ground through a condenser 5,
(2) the non-inverting input terminal 4b is selectively connected to the high voltage tap 7a and the low voltage tap 7b of the voltage divider 7 through a resistance 5a and the switch device 6a.

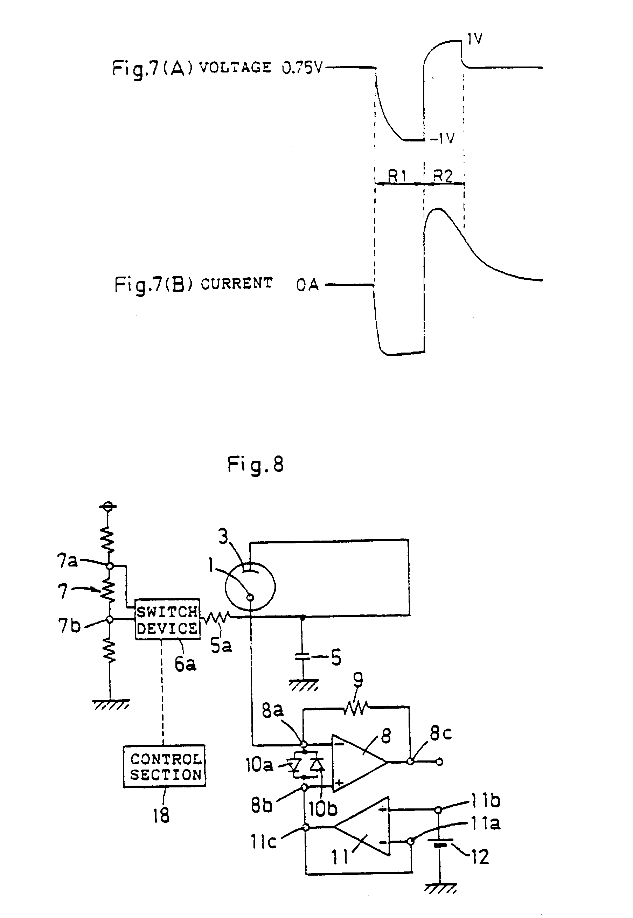

In this embodiment, bias voltages are increased in absolute value (refer to fig. 7(A)) based on a time constant (for example, a time constant of 0.5 seconds). The time constant is determined based on the resistance 5a and the condenser 5. As a result, current undershoots and overshoots are remarkably suppressed as is illustrated in fig. 7(B). That is, an excessive current is securely prevented from flowing. Damage to a membrane or membranes fixed on the surface of the electrode unit, effected by current is remarkably reduced, accordingly. As a result, the life of a membrane or membranes is extended up to about one year while the life of a membrane or membranes applied in the conventional reviving apparatus is about one month. The life is a time period when the penetration ratio of the hydrogen peroxide selective penetration membrane increases by 10 %,

Fig. 8 is an electronic circuit diagram of an electrode reviving apparatus in accordance with a second embodiment of the present invention.

Different points from the first embodiment are as follows,
(1) an electrode unit having two electrodes, one is the working electrode 1 made of platinum while another, the counter electrode 3 made of silver, is used for being revived, and
(2) the counter electrode 3 is directly connected to the switch device 6a by omitting the operational amplifier 4.

In this embodiment, reviving for an electrode unit having two electrodes can be performed. Also, the time period between removal of interfering substances to when it is possible to start actual measuring can be shortened. Furthermore, damage to a membrane or membranes fixed on the surface of the electrode unit, effected by current is remarkably reduced.

This invention is not limited to the foregoing embodiments. Preferably, the voltage for reviving and higher voltage are changed. Preferably, the time period for applying voltage is changed corresponding to the voltage value. Preferably, the reviving method and apparatus are applicable to apparatus for measuring concentrations of substances other than glucose. Preferably, a programmable power source which varies the output voltage under control by a microcomputer, is employed instead of the time constant circuit comprising the resistance 5a and the condenser 5.

The terms and expressions which have been employed here are used as terms of description and not of limitations, and there Is no intention, in the use of such terms and expressions of excluding equivalents of the features shown and described, or portions thereof, it being recognized that various modifications are possible within the scope of the invention as claimed.

## Claims

1. A method for reviving an electrode unit of a biosensor having fixed thereon a membrane, said unit including a working electrode (1) and a counter electrode (3), and which measures a concentration of an object substance based upon an electrical signal generated between the working electrode (1) and the counter electrode (3) when a predetermined forward measurement bias is applied to the working electrode (1) on which a physiologically active substance is placed, the electrical signal being generated based upon a biological-reaction of the object substance, wherein
(1) a predetermined reverse bias is applied to the working electrode (1) for a first predetermined time period; characterised by the further steps of
(2) applying a higher forward bias than the forward measurement bias to the working electrode (1) for a second predetermined time period before the forward measurement bias is applied to the working electrode (1) wherein the predetermined reverse bias is a reverse bias which is gradually increased until its absolute value reaches a predetermined value such preventing excessive current.

2. A method as set forth in claim 1, wherein the second predetermined time period is nearly equal to the first predetermined time period.

3. A method as set forth in claim 1, wherein the higher forward bias is a forward bias which is gradually increased until its absolute value reaches a predetermined value which is higher than the forward measurement bias.

4. A method as set forth in claim 1, wherein the predetermined reverse bias is a reverse bias which is gradually increased until its absolute value reaches a predetermined value, and the higher forward bias is a forward bias which is gradually increased until its absolute value reaches a predetermined value which is higher than the forward measurement bias.

5. An apparatus for reviving an electrode unit of a biosensor which includes a working electrode (1) and a counter electrode (3), and which measures a concentration of an object substance based upon an electrical signal generated between the working electrode (1) and the counter electrode (3) when a predetermined forward measurement bias is applied to the working electrode (1) on which a physiologically active substance is placed, said electrical signal being generated based upon a biological reaction of said object substance, characterized by
reviving reverse voltage applying means (4, 6a, 7a) for applying a reviving reverse voltage to said working electrode (1);
measurement voltage applying means (4, 6a) for applying a measurement voltage to said working electrode (1);
higher voltage applying means (4, 6a, 7b) for applying a voltage higher than the measurement voltage to said working electrode (1); and
selection means (18) for sequentially selecting a condition under which to apply said reviving reverse voltage to said working electrode (1) from said reviving reverse voltage applying means (4, 6a, 7a), a condition under which to apply said higher voltage to said working electrode (1) from said higher voltage applying means (4, 6a, 7b), and a condition under which to apply said measurement voltage to said working electrode (1) from said measurement voltage applying means (4, 6a), when a measuring operation is to be performed; and
further comprising a first time constant means (5, 5a) for gradually increasing said reviving reverse voltage supplied by said reviving reverse voltage applying means (4, 6a, 7a) according to a predetermined time constant.

6. An apparatus as set forth in claim 5, further comprising a second time constant means (5, 5a) for controlling a higher voltage supplied by said higher voltage applying means (4, 6a, 7b) according to a predetermined time constant.

7. An apparatus as set forth in claim 5, further comprising a first time constant means (5, 5a) for controlling a reviving voltage applied by said reviving voltage applying means (4, 6a, 7a) according to a predetermined time constant, and a second time constant means (5, 5a) for controlling a higher voltage applied by said higher voltage applying means (4, 6a, 7b) according to a predetermined time constant.

## Patentansprüche

1. Verfahren zum Reaktivieren einer Elektrodeneinheit eines Biosensors mit einer darauf befestigten Membran, wobei die Einheit einer Arbeitselektrode (1) und eine Gegenelektrode (3) aufweist und eine Konzentration einer Untersuchungssubstanz mißt auf der Grundlage eines zwischen der Arbeitselektrode (1) und der Gegenelektrode (3) erzeugten elektrischen Signales, wenn eine vorbestimmte Vorwärtsmeßvorspannung an die Arbeitselektrode (1) angelegt wird, auf die eine physiologisch aktive Substanz gesetzt ist,
wobei das elektrische Signal auf der Grundlage einer biologischen Reaktion der Untersuchungssubstanz erzeugt wird, worin
(1) eine vorbestimmte Rückwärtsvorspannung an die Arbeitselektrode (1) während einer ersten vorbestimmten Zeitdauer angelegt wird,
gekennzeichnet durch die folgenden weiteren Schritte:
(2) Anlegen einer höheren Vorwärtsvorspannung als die Vorwärtsmeßvorspannung an die Arbeitselektrode (1) während einer weiteren vorbestimmten Zeitdauer, bevor die Vorwärtsmeßvorspannung an die Arbeitselektrode (1) angelegt wird,
wobei die vorbestimmte Rückwärtsvorspannung eine Rückwärtsvorspannung ist, die allmählich erhöht wird, bis ihr Absolutwert einen vorbestimmten Wert erreicht, so daß übermäßiger Strom verhindert wird.

2. Verfahren nach Anspruch 1, bei dem die zweite vorbestimmte Zeitdauer nahezu gleich der ersten vorbestimmten Zeitdauer ist.

3. Verfahren nach Anspruch 1, bei dem die höhere Vorwärtsvorspannung eine Vorwärtsvorspannung ist, die allmählich erhöht wird, bis ihr Absolutwert einen vorbestimmten Wert erreicht, der höher als die Vorwärtsmeßvorspannung ist.

4. Verfahren nach Anspruch 1, bei dem die vorbestimmte Rückwärtsvorspannung eine Rückwärtsvorspannung ist, die allmählich erhöht wird, bis ihr Absolutwert einen vorbestimmten Wert erreicht, und die höhere Vorwärtsvorspannung eine Vorwärtsvorspannung ist, die allmählich erhöht wird, bis ihr Absolutwert einen vorbestimmten Wert erreicht, der höher als die Vorwärtsmeßspannung ist.

5. Gerät zum Reaktivieren einer Elektrodeneinheit eines Biosensors, der eine Arbeitselektrode (1) und eine Gegenelektrode (3) aufweist, und der eine Konzentration einer Untersuchungssubstanz auf der Grundlage eines elektrischen Signales mißt, daß zwischen der Arbeitselektrode (1) und der Gegenelektrode (3) erzeugt ist, wenn eine vorbestimmte Vorwärtsmeßspannung an die Arbeitselektrode (1) angelegt ist, auf der eine physiologisch aktive Substanz gesetzt ist, wobei das elektrische Signal auf der Grundlage einer biologischen Reaktion der Untersuchungssubstanz erzeugt ist,
gekennzeichnet durch
ein Reaktivierungs-Rückwärtsspannungsanlegemittel (4, 6a, 7a) zum Anlegen einer Reaktivierungsrückwärtsspannung an die Arbeitselektrode (1);
ein Meßspannungsanlegemittel (4, 6a) zum Anlegen einer Meßspannung an die Arbeitselektrode (1);
ein Hochspannungsanlegemittel (4, 6a, 7b) zum Anlegen einer Spannung höher als die Meßspannung an die Arbeitselektrode (1); und
ein Auswahlmittel (18) zum sequentiellen Auswählen einer Bedingung, unter der die Reaktivierungsrückwärtsspannung an die Arbeitselektrode (1) von dem Reaktivierungsrückwärtsspannungsanlegemittel (4, 6a, 7a) angelegt wird, eine Bedingung, unter der die höhere Spannung an die Arbeitselektrode (1) von dem Hochspannungsanlegemittel (4, 6a, 7b) angelegt wird, und eine Bedingung unter der die Meßspannung an die Arbeitselektrode (1) von dem Meßspannungsanlegemittel (4, 6a) angelegt wird, wenn eine Meßtätigkeit auszuführen ist; und
weiter mit einem ersten Zeitkonstantenmittel (5, 5a) zum allmählichen Erhöhen der Reaktivierungsrückwärtsspannung, die von dem Reaktivierungsrückwärtsspannungsanlegemittel (4, 6a, 7a) angelegt wird, gemäß einer vorbestimmten Zeitkonstante.

6. Gerät nach Anspruch 5,
weiter mit einem zweiten Zeitkonstantenmittel (5, 5a) zum Steuern einer höheren Spannung, die von dem Hochspannungsanlegemittel (4, 6a, 7b) geliefert wird, gemäß einer vorbestimmten Zeitkonstante.

7. Gerät nach Anspruch 5,
weiter mit einem ersten Zeitkonstantenmittel (5, 5a) zum Steuern einer Reaktivierungsspannung, die von dem Reaktivierungsspannungsanlegemittel (4, 6a, 7a) angelegt wird, gemäß einer vorbestimmten Zeitkonstante, und einen zweiten zeitkonstanten Mittel (5, 5a) zum Steuern einer höheren Spannung, die von dem Hochspannungsanlegemittel (4, 6a, 7b) angelegt wird, gemäß einer vorbestimmten Zeitkontanten.

## Revendications

1. Procédé pour réactiver une unité d'électrode d'un biocapteur sur laquelle est fixée une membrane, ladite unité comprenant une électrode de travail (1) et une électrode de référence (3), et qui mesure une concentration d'une substance cible sur la base d'un signal électrique généré entre l'électrode de travail (1) et l'électrode de référence (3) lorsqu'une polarisation directe de mesure prédéterminée est appliquée à l'électrode de travail (1) sur laquelle est placée une substance physiologiquement active, le signal électrique étant généré sur la base d'une réaction biologique de la substance cible, dans lequel
(1) une polarisation inverse prédéterminée est appliquée à l'électrode de travail (1) pendant une première durée prédéterminée ; caractérisée par les étapes supplémentaires consistant à
(2) appliquer une polarisation directe plus élevée que la polarisation directe de mesure à l'électrode de travail (1) pendant une deuxième durée prédéterminée avant application de la polarisation directe de mesure à l'électrode de travail (1), dans laquelle la polarisation inverse prédéterminée est une polarisation inverse qui est graduellement augmentée jusqu'à ce que sa valeur absolue atteigne une valeur prédéterminée, ce qui évite un courant excessif.

2. Procédé selon la revendication 1, dans lequel la deuxième durée prédéterminée est pratiquement égale à la première durée prédéterminée.

3. Procédé selon la revendication 1, dans lequel la polarisation directe plus élevée est une polarisation directe qui est graduellement augmentée jusqu'à ce que sa valeur absolue atteigne une valeur prédéterminée qui est supérieure à la polarisation directe de mesure.

4. Procédé selon la revendication 2, dans lequel la polarisation inverse prédéterminée est une polarisation inverse qui est graduellement augmentée jusqu'à ce que sa valeur absolue atteigne une valeur prédéterminée, et la polarisation directe plus élevée est une polarisation directe qui est graduellement augmentée jusqu'à ce que sa valeur absolue atteigne une valeur prédéterminée qui est supérieure à la polarisation directe de mesure.

5. Appareil pour réactiver une unité d'électrode d'un biocapteur qui comprend une électrode de travail (1) et une électrode de référence (3), et qui mesure une concentration d'une substance cible sur la base d'un signal électrique généré entre l'électrode de travail (1) et l'électrode de référence (3) lorsqu'une polarisation directe de mesure prédéterminée est appliquée à l'électrode de travail (1) sur laquelle est placée une substance physiologiquement active, ledit signal électrique étant généré sur la base d'une réaction biologique de ladite substance cible, caractérisé par
des moyens d'application de tension inverse de réactivation (4, 6a, 7a) destinés à appliquer une tension inverse de réactivation à ladite électrode de travail (1) ;
des moyens d'application de tension de mesure (4, 6a) destinés à appliquer une tension de mesure à ladite électrode de travail (1) ;
des moyens d'application de tension plus élevée (4, 6a, 7b) destinés à appliquer une tension plus élevée que la tension de mesure à ladite électrode de travail (1) ; et
des moyens de sélection (18) pour sélectionner séquentiellement un état dans lequel on applique ladite tension inverse de réactivation à ladite électrode de travail (1) à partir desdits moyens d'application de tension inverse de réactivation (4, 6a, 7a), un état dans lequel on applique ladite tension plus élevée à ladite électrode de travail (1) à partir desdits moyens d'application de tension plus élevée (4, 6a, 7b), et un état dans lequel on applique ladite tension de mesure à ladite électrode de travail (1) à partir desdits moyens d'application de tension de mesure (4, 6a), lorsqu'une opération de mesure doit être réalisée ; et
comprenant en outre des premiers moyens de constante de temps (5, 5a) destinés à augmenter graduellement ladite tension inverse de réactivation appliquée par lesdits moyens d'application de tension inverse de réactivation (4, 6a, 7a) en fonction d'une constante de temps prédéterminée.

6. Appareil selon la revendication 5, comprenant en outre des deuxièmes moyens de constante de temps (5, 5a) destinés à commander une tension plus élevée appliquée par lesdits moyens d'application de tension plus élevée (4, 6a, 7b) en fonction d'une constante de temps prédéterminée.

7. Appareil selon la revendication 5, comprenant en outre des premiers moyens de constante de temps (5, 5a) destinés à commander une tension de réactivation appliquée par lesdits moyens d'application de tension de réactivation (4, 6a, 7a) en fonction d'une constante de temps prédéterminée, et des deuxièmes moyens de constante de temps (5, 5a) destinés à commander une tension plus élevée appliquée par lesdits moyens d'application de tension plus élevée (4, 6a, 7b) en fonction d'une constante de temps prédéterminée.
